# EUROPEAN PATENT SPECIFICATION

(11) **EP 2 617 860 B1**
(45) Date of publication and mention of the grant of the patent: **08.11.2017**
(21) Application number: 11823634.8
(22) Date of filing: 08.09.2011
(51) Int. Cl.: C23C 10/48, B22F 1/02, C22C 5/04, C22C 29/12

(54) **ALLOY MATERIAL FOR HIGH TEMPERATURE SERVICE HAVING EXCELLENT OXIDATION RESISTANCE PROPERTIES, AND PROCESS FOR PRODUCTION THEREOF**
LEGIERUNGSMATERIAL FÜR EINEN HOCHTEMPERATUR-SERVICE MIT AUSGEZEICHNETEN OXIDATIONSBESTÄNDIGKEITSEIGENSCHAFTEN UND VERFAHREN ZU SEINER HERSTELLUNG
MATÉRIAU D'ALLIAGE POUR UTILISATION À HAUTE TEMPÉRATURE, QUI PRÉSENTE D'EXCELLENTES PROPRIÉTÉS DE RÉSISTANCE À L'OXYDATION, ET SON PROCÉDÉ DE PRODUCTION

(30) Priority: 09.09.2010 JP 2010202067
(43) Date of publication of application: 24.07.2013
(73) Proprietor: National Institute for Materials Science, Tsukuba-shi, Ibaraki 305-0047 (JP)
(72) Inventor: BAO Zebin, Tsukuba-shi Ibaraki 305-0047 (JP); MITARAI Yoko, Tsukuba-shi Ibaraki 305-0047 (JP); MURAKAMI Hideyuki, Tsukuba-shi Ibaraki 305-0047 (JP)
(74) Representative: Calamita, Roberto
(86) International application number: PCT/JP2011/070479
(87) International publication number: WO 2012/033160

(56) References cited:
- JP-A- 2 186 579
- JP-A- 7 235 364
- JP-A- 54 062 923
- JP-A- 2003 121 320
- JP-A- 2008 027 870
- US-A- 5 275 670
- US-A- 5 780 157
- FENG WU, HIDEYUKI MURAKAMI AND HIROSHI HARADA: "Cyclic Oxidation Behavior of Iridium-Modified Aluminide Coatingsfor Nickel-Base Single Crystal Superalloy TMS-75", MATERIALS TRANSACTIONS, vol. 44, no. 9, 30 September 2003 (2003-09-30), pages 1675-1678, XP002724086,
- MIURA S ET AL: "Phase equilibria in the Ir-rich portion of the Ir-Al-X (X: Ti, Zr and Hf) ternary systems", JOURNAL OF ALLOYS AND COMPOUNDS, ELSEVIER SEQUOIA, LAUSANNE, CH, vol. 393, no. 1-2, 3 May 2005 (2005-05-03) , pages 239-247, XP027812956, ISSN: 0925-8388 [retrieved on 2005-05-03]

## Description

### Technical Field

The present invention relates to a method for producing an Ir-based alloy material or Ru-based alloy material for high temperature having excellent high-temperature oxidation resistance.

### Background Art

Ir and Ru are metals having excellent high-temperature strength and excellent corrosion resistance, and expected to be applied to a structural material used in an extreme environment, and have been utilized as, for example, a crucible for growing single crystals for use in an optical device and an automobile engine plug.

However, Ir and Ru form oxides IrO₃ and RuO₃, respectively, in a high-temperature oxidizing atmosphere, and the sublimation temperatures of these oxides are lower than those of the respective metals, namely, IrO₃ and RuO₃ have sublimation temperatures of 1,092°C and 1,200°C, respectively. Therefore, Ir and Ru have a problem in that they cannot be used in an oxidizing atmosphere at a temperature as high as 1,100°C or more. As a method for solving the problem, a method has been employed in which the surface of Ir or Ru is coated with an Al₂O₃ (alumina) film which is an oxidation-resistant material. However, there is a difference in crystal structure and lattice constant between the surface of the above metal material and alumina, and therefore a peeling phenomenon of alumina easily occurs, and thus, even when the surface of the metal material is directly coated with alumina, the resultant coating is not effective as an oxidation-resistant film.

On the other hand, an attempt has also been made to perform a method in which Al is directly reacted with the surface of an Ir alloy or Ru alloy by an aluminizing method. However, when Al and the Ir alloy or Ru alloy are under conditions at a temperature which is the melting point of Al or higher, the molten Al and Ir or Ru are vigorously reacted with each other, making it diffcult to form an oxidation-resistant protective film having an appropriately controlled structure.

### Summary of the Invention

### Problems that the Invention is to Solve

An object of the present invention is to a method for producing an Ir-based alloy material or Ru-based alloy material, wherein, for enabling the use of Ir or Ru having excellent high-temperature strength in a high-temperature oxidizing atmosphere, the Ir-based alloy material or Ru-based alloy material has formed on the surface thereof an intermetallic compound film having excellent oxidation resistance and thus is improved in the oxidation resistant performance while maintaining the high-temperature strength.

### Means for Solving the Problems

In the invention, the above object has been achieved by forming an IrAl intermetallic compound film or a RuAl intermetallic compound film on the surface of the Ir-based alloy material or Ru-based alloy material so that an alumina protective film is formed in a high-temperature oxidizing atmosphere to cover the surface of the intermetallic compound film. The treatment method of forming an IrAl intermetallic compound film or a RuAl intermetallic compound film on the surface of the Ir-based alloy material or Ru-based alloy material has been used for a Ni-based alloy and the like as an aluminizing method, but Ir or Ru is vigorously reacted with Al and this reaction is not easy to be controlled. In the invention, the inventors have succeeded in reducing the activity of Al during the aluminizing treatment to uniformly form a layer having an increased Al concentration only in the surface film. By the invention, the Ir-based alloy material or Ru-based alloy material, which has high strength at high temperatures but has a problem about the oxidation resistant properties, can be dramatically improved in the oxidation resistant properties.

The alloy material for high temperature having excellent oxidation resistant properties produced by the method of the invention is an Ir-based alloy material or Ru-based alloy material containing Al in an amount of 10 to 30 atomic % in the Ir based alloy material orAl in an amount of 3 to 40 atomic % in the Ru based alloy material, wherein the Ir-based alloy material or Ru-based alloy material has a surface uniformly covered with an IrAl intermetallic compound film or a RuAl intermetallic compound film.

It is preferred that one or more of Sc, Ti, V, Cr, Mn, Y, Zr, Nb, Mo, Tc, Hf, Ta, W and Re is added to the Ir based alloy material or the Ru based alloy material in such an amount that it is dissolved therein.

Further, in the alloy material for high temperature having excellent oxidation resistant properties produced according to the method of the invention, it is preferred that the IrAl intermetallic compound film or RuAl intermetallic compound film has a thickness in the range of from 2 to 50 µm.

The method of the invention for producing the alloy material for high temperature having excellent oxidation resistant properties comprises immersing an Ir-based alloy material or a Ru-based alloy material in a mixed powder at 800 to 1,300°C for 2 to 6 hours to form an IrAl intermetallic compound film or a RuAl intermetallic compound film on the surface of the Ir-based alloy material or Ru-based alloy material, wherein the mixed powder has an Al alloy powder and an alumina powder mixed in a mass ratio in the range of from 1:1.2 to 1:0.8 and further has an activator powder added in an amount of 1 to 6% by mass, wherein the Al alloy powder used for the Ir-based alloy material has an Al concentration of 45 to 65 atomic %, or the Al alloy powder used for the Ru-based alloy material has an Al concentration of 35 to 50 atomic %.

In the method of the invention for producing the alloy material for high temperature having excellent oxidation resistant properties, it is preferred that the Al alloy powder contains at least one member of Fe, Ni, and Cr.

### Advantage of the Invention

By virtue of the IrAl intermetallic compound film or RuAl intermetallic compound film formed on the surface of the Ir-based alloy material or Ru-based alloy material, an alumina protective film is formed in a high-temperature oxidizing atmosphere to cover the surface of the IrAl intermetallic compound film or RuAl intermetallic compound film. The thus formed protective film enables the use of the Ir-based alloy material or Ru-based alloy material having a problem about the oxidation resistant properties in a high-temperature oxidizing atmosphere.

Further, in the alloying and the Ir-based alloy material or Ru-based alloy material having formed thereon an IrAl intermetallic compound film or a RuAl intermetallic compound film, precipitation is not caused inside of the material, and therefore the lowering of the processability and high-temperature strength is suppressed.

### Brief Description of Drawings

Fig. 1 is scanning electron photomicrographs of the cross-sections of the samples obtained after the aluminizing treatment. (a) shows an Ir-10 at.% Al alloy, and (b) shows an Ir-10 at.% AI-3 at.% Hf alloy.
Fig. 2 is scanning electron photomicrograph of the cross-section of the sample in a high-temperature oxidizing atmosphere.
Fig. 3 is a diagram showing oxidation loss behaviors in an isothermal oxidation test with respect to the samples which have been or have not been subjected to aluminizing treatment.
Fig. 4 is a diagram showing oxidation loss behaviors in a repeated oxidation test with respect to the samples which have been or have not been subjected to aluminizing treatment.
Fig. 5 is a photograph showing the appearance of the sample obtained after the aluminizing treatment using an Al powder.
Fig. 6 is a scanning electron photomicrograph of the cross-section of the sample obtained after the aluminizing treatment in which the Al concentration of the Al alloy powder is relatively high.
Fig. 7 is a binary system state diagrams for Ir-Al and Ru-Al.
Fig. 8 is a scanning electron photomicrograph of the cross-section of the sample obtained after the aluminizing treatment.
Fig. 9 is a scanning electron photomicrograph of the cross-section of the sample obtained after the aluminizing treatment.
Fig. 10 is a diagram showing oxidation loss behaviors in an isothermal oxidation test with respect to the samples which have been or have not been subjected to aluminizing treatment.

### Mode for Carrying Out the Invention

The Ir-based alloy material or Ru-based alloy material produced by the method of the invention contains at least one member of Al, Sc, Ti, V, Cr, Mn, Y, Zr, Nb, Mo, Tc, Hf, Ta, W, and Re in such an amount that a precipitation phase is not formed. These elements to be added individually have different solid solubility limits in Ir or Ru as shown in Table 1, but, according to the purpose of the use of the Ir-based alloy material or Ru-based alloy material or the like, at least one member of the above elements can be added in such an amount that it is dissolved in the alloy material. It is preferred that the Ir-based alloy material has an Al content of 10 to 30 atomic %, or the Ru-based alloy material has an Al content of 3 to 40 atomic %.

**Table 1**

| The unit of solid solubility limit is atomic %, and symbol "-" indicates that the solid solubility limit is unknown. | | | | | | | | | | | | | | |
|---|---|---|---|---|---|---|---|---|---|---|---|---|---|---|
| | Sc | Ti | V | Cr | Mn | Y | Zr | Nb | Mo | Tc | Hf | Ta | W | Re |
| Ir | 6 | 10 | 12 | 38 | 40 | 1 | 3 | 11 | 22 | 10 | 5 | 12 | 18 | 25 |
| Ru | 1 | 14 | 30 | 40 | - | 1 | 1 | 8 | 50 | - | 3 | 20 | 42 | 50 |

The Ir-based alloy material or Ru-based alloy material can be ingoted by a general dissolving method. Then, the solidified ingot is processed into a predetermined plate, rod, or the like by a general forging rolling method, and then shaped into a desired form by plastic processing, cutting processing, or the like.

On the surface of the Ir-based alloy material or Ru-based alloy material shaped into a desired form, an IrAl intermetallic compound film or a RuAl intermetallic compound film is formed by an aluminizing method. The aluminizing method can be conducted under the conditions described below.

The powder material used for forming an IrAl intermetallic compound film or a RuAl intermetallic compound film comprises three types of powders, i.e., (1) an Al alloy powder for reducing the activity of Al, (2) an alumina powder for controlling a vigorous reaction between the Ir-based alloy material or Ru-based alloy material and the Al alloy powder, and (3) an activator powder for activating Al in the Al alloy powder to generate an Al chloride in a gas phase. As examples of Al alloy powders, there can be mentioned those containing at least one member of Fe, Ni, and Cr.

The Al alloy powder is used for preventing a liquid phase from being caused at an aluminizing treatment temperature in the range of from 800 to 1,300°C to reduce the activity of Al, making it easy to control a reaction of the Ir-based alloy material or Ru-based alloy material with Al. When metal Al in the form of a single substance is used, Al becomes a liquid phase at the above-mentioned aluminizing treatment temperature and is brought into direct contact with the Ir-based alloy material or Ru-based alloy material to cause a rapid reaction, making it impossible to obtain an IrAl intermetallic compound film or a RuAl intermetallic compound film. A single type of the Al alloy powder or two or more types of the Al alloy powders can be used. In the case of the Ir-based alloy material, when a single type of the Al alloy powder is used, it is preferred that the Al alloy powder has an Al concentration of 45 to 65 atomic %, and, when two or more types of the Al alloy powders are used, it is preferred that the Al alloy powders collectively have an Al concentration of 45 to 65 atomic %. When the Al concentration of the Al alloy powder is lower than 45 atomic %, the activity of Al is excessively reduced, so that the reaction does not effectively proceed. On the other hand, when the Al concentration is higher than 65 atomic %, a liquid phase is formed in the Al alloy powder at the above-mentioned aluminizing treatment temperature, and therefore an intermetallic compound other than the IrAl intermetallic compound or RuAl intermetallic compound is formed, leading to a problem that an IrAl intermetallic compound or a RuAl intermetallic compound is not formed. In the case of the Ru-based alloy material, a reaction of the alloy material with the Al alloy powder is vigorously caused, and therefore it is necessary that the Al concentration of the Al alloy powder be low. Specifically, when a single type of the Al alloy powder is used, it is preferred that the Al alloy powder has an Al concentration of 35 to 50 atomic %, and, when two or more types of the Al alloy powders are used, it is preferred that the Al alloy powders collectively have an Al concentration of 35 to 50 atomic %. The Al alloy powder preferably has a particle size in the range of from 40 to 100 µm, taking the reactivity and easy handling into consideration.

The alumina powder is added for uniformly dispersing the Al alloy powder and activator powder to control the reaction. The mass ratio between the Al alloy powder and the alumina powder varies depending on the Al concentration of the Al alloy powder, but the mass ratio needs to be in the range of from 1:1.2 to 1:0.8. When the blending ratio of the alumina powder incorporated is too large, the reaction slowly proceeds. The alumina powder preferably has a particle size in the range of from 5 to 20 µm, taking the reaction control and easy handling into consideration.

As the activator powder, a chloride of ammonia or a chloride of a metal which promotes the formation of an Al chloride, such as Na, Cr, or Ag, is suitable. The mixing ratio of the activator powder is advantageously in the range of from 1 to 6% by mass. When the mixing ratio of the activator powder is less than 1 % by mass, a satisfactory amount of AlClₓ (wherein x is 1, 2, or 3) is not formed, and, on the other hand, when the mixing ratio of the activator powder is more than 6% by mass, the amount of the formed AlClₓ is saturated and such a large amount of the activator powder is not effective.

The aluminizing method is a process in which a sample and an activator powder are placed in an Al alloy powder and the resultant mixture is maintained at a high temperature to form an Al compound on the surface of the sample. Gas of AlClₓ, which vaporizes at a relatively low temperature, is generated from the Al alloy powder due to the activator powder. AlCl₃ has a sublimation temperature of 180°C, and the other compounds in a gaseous form are stable at room temperature. AlClₓ in a gaseous form supplies Al to the surface of the sample to form a compound of the element contained in the sample, i.e., Ir or Ru and Al. For forming gas of AlClₓ, Al in a liquid phase is not suitable, but an Al alloy powder in a solid phase is suitable.

In the aluminizing method, a chemical reaction proceeds as shown below, forming an intermetallic compound. The reaction with respect to Ir is shown below, but the reaction with respect to Ru is similar to this.

NH₄Cl as an activator first decomposes into ammonia and hydrogen chloride.

NH₄Cl → NH₃ (g) + HCl (g)

HCl separates Al from the Al alloy powder to form an Al chloride ([Al] indicates Al in the alloy).

2[Al] + 6HCl (g) → 2AlCl₃ (g) + 3H₂ (g)

The Al chloride reacts with active [Al] to form AICI.

2[Al] + AlCl₃ (g) → 3AICI (g)

AICI reacts with Ir on the surface to form IrAl.

3AlCl (g) + 2Ir → 2IrAl + AlCl₃ (g)

The aluminizing treatment temperature is advantageously in the range of from 800 to 1,300°C, preferably in the range of from 900 to 1,050°C. When the aluminizing temperature is lower than 800°C, diffusion is so slow that the reaction requires a prolonged period of time. On the other hand, when the aluminizing temperature is higher than 1,300°C, the raw material powder used in the aluminizing treatment is molten, so that a satisfactory amount of AlClₓ is not supplied.

The aluminizing treatment time varies depending on the treatment temperature, but the aluminizing time is preferably 2 to 6 hours at a temperature in the range of from 900 to 1,050°C. When the aluminizing time is less than 2 hours, the reaction does not satisfactorily proceed, making it difficult to obtain an IrAl intermetallic compound film or RuAl intermetallic compound film having a satisfactory thickness. On the other hand, when the aluminizing time is more than 6 hours, AlClₓ is completely consumed, so that the increase of the thickness of the intermetallic compound film cannot be desired.

The above-mentioned aluminizing treatment can be performed under atmospheric pressure using an electric furnace, such as a general muffle furnace or tubular furnace.

The IrAl intermetallic compound film or RuAl intermetallic compound film formed by the aluminizing treatment preferably has a thickness in the range of from 2 to 50 µm. The IrAl intermetallic compound film or RuAl intermetallic compound film is brittle and therefore, when the thickness of the film is more than 50 µm, a crack is likely to be formed to cause a breakage of the film, so that the film loses the function as an oxidation-resistant film. On the other hand, when the thickness of the film is less than 2 µm, it is unlikely that an alumina protective film formed on the surface of the IrAl intermetallic compound film or RuAl intermetallic compound film uniformly grows in an oxidizing atmosphere, so that the oxidation resistance is reduced.

### Examples

### (Example 1)

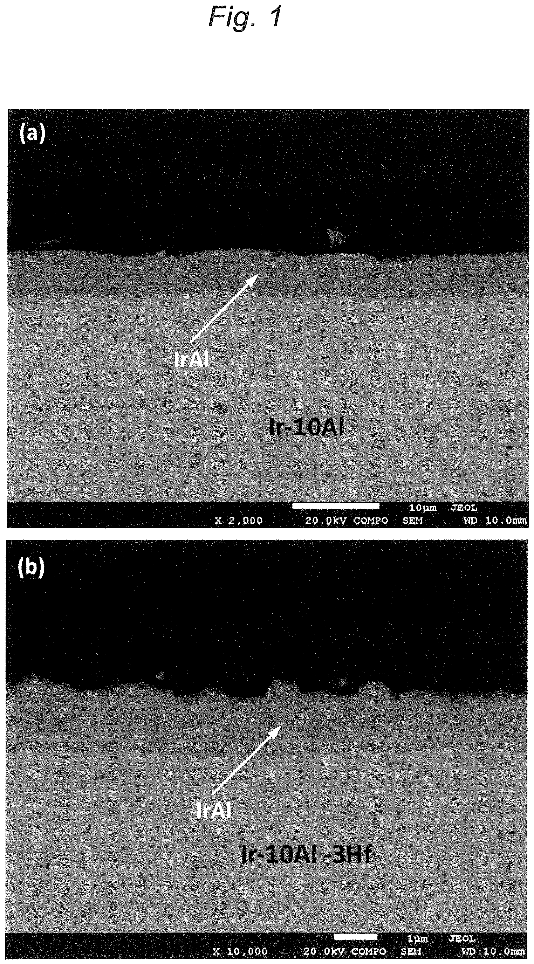

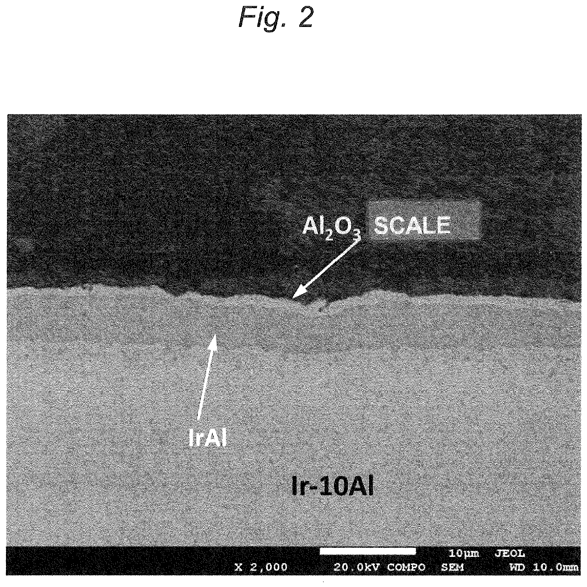

An Ir-10 at.% Al alloy and an Ir-10 at.% Al-3 at.% Hf alloy were subjected to aluminizing treatment. The Ir-based alloy was immersed in a mixed powder and maintained at 950°C for 2 hours, wherein the mixed powder had an Fe-66 at.% Al alloy powder, a Ni-35 at.% Al alloy powder, and an alumina powder blended in a mass ratio of 1:2:3 and had NH₄Cl added in an amount of 3% by mass. After the treatment, as shown in Figs. 1(a) and 1(b), an IrAl intermetallic compound film having a thickness of 5 µm was uniformly and stably formed on the surface of the alloy. With respect to the sample having the film formed thereon, which has been subjected to repeated oxidation test at 1,100°C for 200 hours, the state of the film examined under a scanning electron microscope is shown in Fig. 2. The 1 µm Al₂O₃ (alumina) scale stably formed on the surface of the IrAl intermetallic compound film was observed.

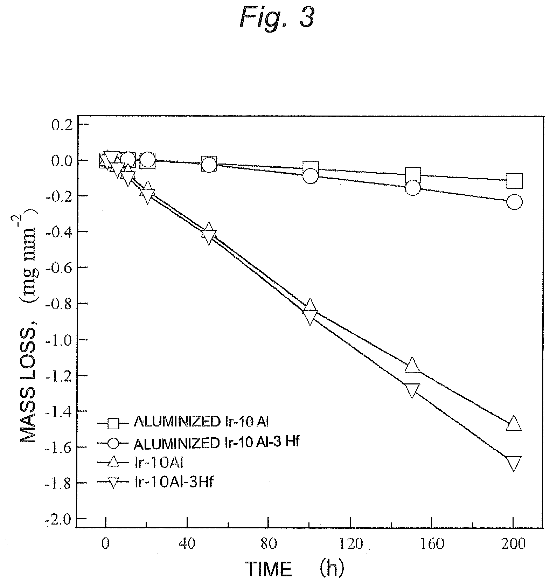

The oxidation loss behaviors of samples in an isothermal oxidation test at 1,100°C are shown in Fig. 3. The Ir-Al alloys indicated by Δ and ∇ shown in Fig. 3, which have not been subjected to aluminizing treatment, suffer a loss during the oxidation test. The reason for this is that Ir in the alloy is oxidized to form Ir oxide on the surface of the alloy, and the formed Ir oxide, which has a sublimation temperature of 1,092°C, vaporizes. On the other hand, the Ir-Al alloy and Ir-Al-Hf alloy indicated by □ and ○, the surfaces of which have been subjected to aluminizing treatment, suffer almost no loss in 200 hours. By the aluminizing treatment, an IrAl intermetallic compound film is formed on the surface of the alloy, and stable alumina is formed on the surface of the IrAl intermetallic compound film in an oxidizing atmosphere, thus dramatically improving the oxidation resistant properties.

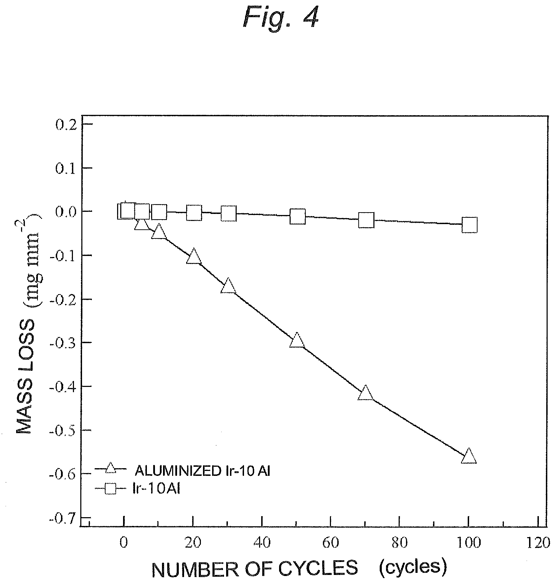

Further, the oxidation loss behaviors of samples in a 100-cycle repeated oxidation test at 1,100°C are shown in Fig. 4. The Ir-Al alloy indicated by Δ shown in Fig. 4, the surface of which has not been subjected to aluminizing treatment, suffers a loss during the oxidation test. The reason for this is that Ir in the alloy is oxidized to form Ir oxide on the surface of the alloy, and the formed Ir oxide, which has a sublimation temperature of 1,092°C, vaporizes. On the other hand, the Ir-Al alloy indicated by □, the surface of which has been subjected to aluminizing treatment, suffers almost no loss during the 100-cycle repeated tests. By the aluminizing treatment, an IrAl intermetallic compound film is formed on the surface of the alloy, and stable alumina is formed on the surface of the IrAl intermetallic compound film in an oxidizing atmosphere, thus dramatically improving the oxidation resistant properties. Even in the repeated oxidation tests under the conditions which are more stringent than those for the isothermal oxidation test, alumina is not peeled and continues to be stably formed.

### (Comparative Example 1)

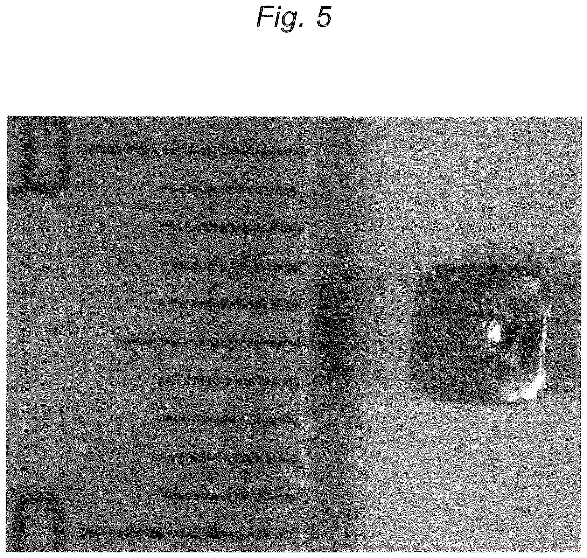

The same Ir-based alloy as in Example 1 was subjected to aluminizing treatment. The Ir-based alloy was immersed in a mixed powder and maintained at 1,000°C for 4 hours, wherein the mixed powder had an Al powder, a Cr powder, and an alumina powder blended in a mass ratio of 1:1:2 and had NH₄Cl added in an amount of 2% by mass. In this aluminizing treatment, as shown in Fig. 5, a vigorous reaction was caused to dissolve the sample. In the aluminizing method using an Al powder, the activity of Al was too high to obtain an IrAl intermetallic compound film.

### (Comparative Example 2)

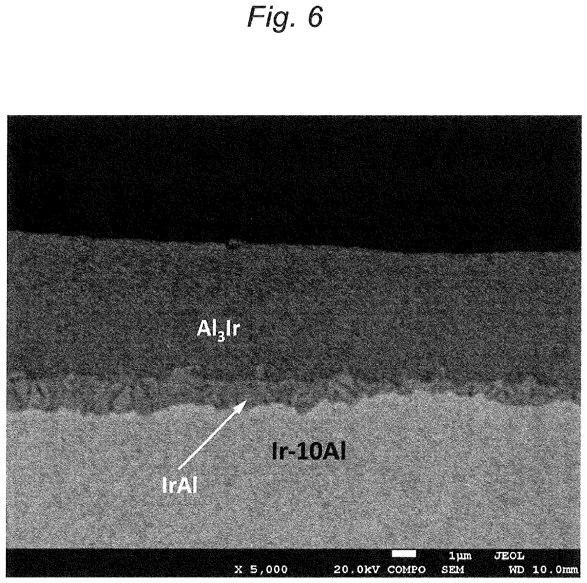

The same Ir-based alloy as in Example 1 was subjected to aluminizing treatment. The Ir-based alloy was immersed in a mixed powder and maintained at 950°C for 2 hours, wherein the mixed powder had an Fe-66 at.% Al alloy powder and an alumina powder blended in a mass ratio of 1:1 and had NH₄Cl added in an amount of 3% by mass. As shown in Fig. 6, an IrAl intermetallic compound film having a thickness of 1 µm was formed on the surface of the Ir-based alloy, but an Al₃Ir intermetallic compound film having a large Al content and having a thickness of 5 µm was formed on the surface of the IrAl intermetallic compound film. The Al₃Ir intermetallic compound has a low melting point and is slightly brittle, and therefore there is a possibility that the Al₃Ir intermetallic compound is dissolved or peeled off upon being used at a high temperature.

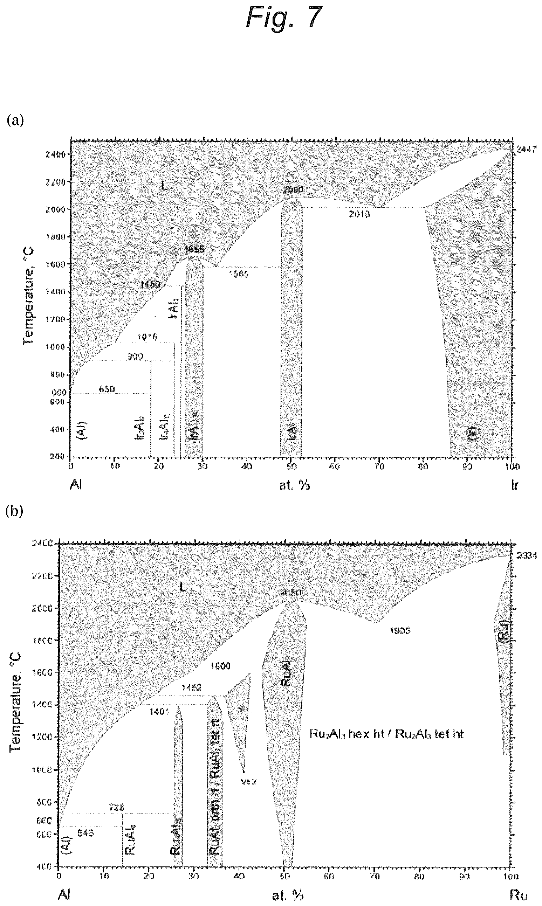

Example 1 is an example for the Ir-based alloy. As shown in Fig. 7, a comparison is made between the Ir-Al binary system state diagram and the Ru-Al binary system state diagram. There is no intermetallic compound between Ir and the intermetallic compound IrAl, and the concentrations are in equilibrium in a wide range of temperature up to about 2,000°C. Similarly the concentrations are in equilibrium between Ru and RuAl, and it is understood that the phenomenon of an equilibrium phase which occurs in Ir is very likely to occur in Ru.

### (Example 2)

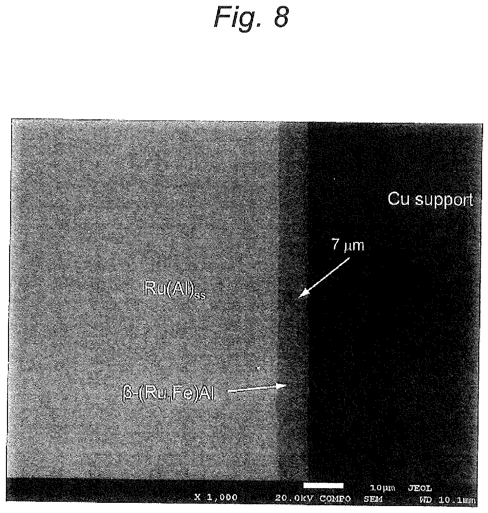

A Ru-3 at.% Al alloy was actually prepared by an arc dissolving method. The prepared Ru-based alloy was subjected to aluminizing treatment. The Ru-based alloy was immersed in a mixed powder and maintained at 975°C for 4 hours, wherein the mixed powder had 3.5 g of an Fe-66 at.% Al alloy powder, 6.5 g of a Ni-35 at.% Al alloy powder, and 10 g of an alumina powder blended and had NH₄Cl added in an amount of 0.4 g (2% by mass). After the treatment, as shown in Fig. 8, a RuAl intermetallic compound film having a thickness of 7 µm was formed on the surface of the alloy. The RuAl intermetallic compound film has a slight amount of Fe mixed thereinto.

### (Comparative Example 3)

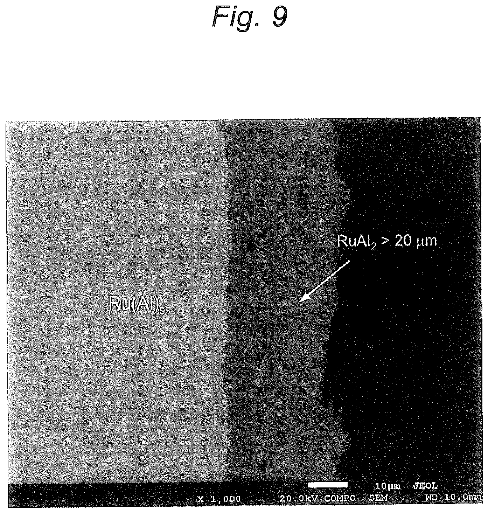

A Ru-3 at.% Al alloy was immersed in a mixed powder and maintained at 1,000°C for 8 hours, wherein the mixed powder had 5 g of an Fe-66 at.% Al alloy powder, 5 g of a Ni-35 at.% Al alloy powder, and 10 g of an alumina powder blended and had NH₄Cl added in an amount of 0.4 g (2% by mass). After the treatment, as shown in Fig. 9, a RuAl₂ intermetallic compound film having a thickness of 20 µm was formed on the surface of the alloy.

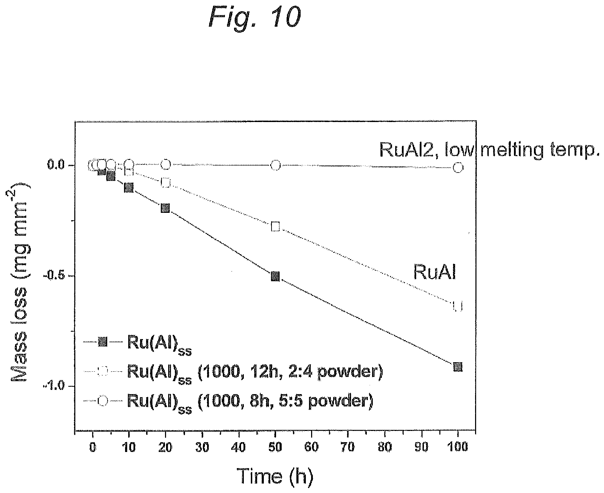

An isothermal oxidation test was conducted at 1,100°C. As shown in Fig. 10, the sample having formed thereon a RuAl intermetallic compound film in Example 2 suffered a slight loss, but the loss was small, as compared to the loss of the sample which had not been subjected to aluminizing treatment. From this, it is understood that the formation of the RuAl intermetallic compound film is effective in improving the oxidation resistant properties. On the other hand, the sample having formed thereon a RuAl₂ intermetallic compound film suffered less loss in the oxidation resistant test as shown in Fig. 10. However, the RuAl₂ intermetallic compound in Comparative Example 3 has a low melting point, and therefore is considered unsuitable for improving the oxidation resistant properties.

Needless to say, the present invention is not limited to the above-mentioned Examples.

### Industrial Applicability

The alloy material for high temperature having excellent oxidation resistant properties produced by the method of the invention can be used in members which are used at a temperature of 1,200°C or higher and required to have a strength and an oxidation resistance. For example, the alloy material is expected to be applied to an engine, a container for dissolving a ceramic, a protecting tube for high temperature measurement, and the like in the field of aerospace. Further, the method of the invention for producing the alloy material for high temperature having excellent oxidation resistant properties is expected to be applied to a high-temperature oxidation-resistant coating technique.

## Claims

1. A method for producing an alloy material for high temperature with an excellent oxidation resistant property, the alloy material being formed by an Ir based alloy material or a Ru based alloy material which contains Al in an amount of 10 to 30 atomic % in the Ir based alloy material or Al in an amount of 3 to 40 atomic % in the Ru based alloy material, and a surface of the Ir based alloy material or the Ru based alloy material being uniformly covered by an IrAl intermetallic compound film or a RuAl intermetallic compound film, the method comprising the steps of:
mixing Al alloy powders and alumina powders in a mass ratio of from 1:1.2 to 1:0.8;
dipping the Ir based alloy material or the Ru based alloy material in mixture powders, to which activator powders further added in an amount of from 1 to 6 mass %, for from 2 to 6 hours at from 800 to 1300°C; and
forming the IrAl intermetallic compound film or the RuAl intermetallic compound film on the surface of the Ir based alloy material or the Ru based alloy material,
wherein the concentration of Al in the Al alloy powders is from 45 to 65 atomic % in the case of the Ir based alloy material or from 35 to 50 atomic % in the case of the Ru based alloy material.

2. A method as claimed in claim 1, wherein one or more of Sc, Ti, V, Cr, Mn, Y, Zr, Nb, Mo, Tc, Hf, Ta, W or Re is added to the Ir based alloy material or the Ru based alloy material in such an amount that it is dissolved therein.

3. A method as claimed in claim 1 or claim 2, wherein the Al alloy powders contain one or more of Fe, Ni or Cr.

4. A method as claimed in any of claims 1 to 3, wherein the thickness of the IrAl intermetallic compound film or the RuAl intermetallic compound film is in a range of from 2 to 50 µm.

## Patentansprüche

1. Verfahren zur Herstellung eines Legierungsmaterials für hohe Temperatur mit einer ausgezeichneten Oxidationsbeständigkeitseigenschaft, wobei das Legierungsmaterial durch ein Ir-basiertes Legierungsmaterial oder ein Rubasiertes Legierungsmaterial gebildet wird, das Al in einer Menge von 10 bis 30 Atom-% in dem Ir-basierten Legierungsmaterial oder Al in einer Menge von 3 bis 40 Atom-% in dem Ru-basierten Legierungsmaterial enthält, und eine Oberfläche von dem Ir-basierten Legierungsmaterial oder dem Ru-basierten Legierungsmaterial gleichförmig mit einem intermetallischen IrAl-Verbindungsfilm oder einen intermetallischen RuAI-Verbindungsfilm bedeckt ist, wobei das Verfahren die Schritte umfasst:
Mischen von AI-Legierungspulvern und Aluminiumoxidpulvern in einem Masseverhältnis von 1:1,2 bis 1:0,8;
Tauchen des Ir-basierten Legierungsmaterials oder des Ru-basierten Legierungsmaterials in Gemischpulver, zu denen weiterhin Aktivatorpulver in einer Menge von 1 bis 6 Masse-% gegeben wurden, für von 2 bis 6 Stunden bei von 800 bis 1300 °C; und
Bilden des intermetallischen IrAl-Verbindungsfilms oder des intermetallischen RuAI-Verbindungsfilms auf der Oberfläche von dem Ir-basierten Legierungsmaterial oder dem Ru-basierten Legierungsmaterial,
wobei die Konzentration von Al in den Al-Legierungspulvern von 45 bis 65 Atom-% in dem Fall von dem Ir-basierten Legierungsmaterial oder von 35 bis 50 Atom-% in dem Fall von dem Ru-basierten Legierungsmaterial ist.

2. Verfahren nach Anspruch 1, wobei einer oder mehrere von Sc, Ti, V, Cr, Mn, Y, Zr, Nb, Mo, Tc, Hf, Ta, W oder Re zu dem Ir-basierten Legierungsmaterial oder dem Ru-basierten Legierungsmaterial in einer derartigen Menge gegeben wird, dass es darin gelöst ist.

3. Verfahren nach Anspruch 1 oder Anspruch 2, wobei die AI-Legierungspulver einen oder mehrere von Fe, Ni oder Cr enthalten.

4. Verfahren nach einem von Ansprüchen 1 bis 3, wobei die Dicke von dem intermetallischen IrAl-Verbindungsfilm oder dem intermetallischen RuAl-Verbindungsfilm in einem Bereich von 2 bis 50 µm liegt.

## Revendications

1. Procédé de fabrication d'un matériau d'alliage à haute température avec une excellente propriété de résistance à l'oxydation, le matériau d'alliage étant formé d'un matériau d'alliage à base d'Ir ou d'un matériau d'alliage à base de Ru qui contient de l'Al en une quantité de 10 à 30 % atomique dans le matériau d'alliage à base d'Ir ou de l'Al en une quantité de 3 à 40 % atomique dans le matériau d'alliage à base de Ru, et une surface du matériau d'alliage à base d'Ir ou du matériau d'alliage à base de Ru étant recouverte uniformément par un film d'un composé intermétallique IrAl ou par un film d'un composé métallique RuAl, le procédé comprenant les étapes de :
mélanger des poudres d'alliage d'Al et des poudres d'alumine dans un rapport de masse de 1: 1,2 à 1: 0,8 ;
plonger le matériau d'alliage à base d'Ir ou le matériau d'alliage à base de Ru dans des poudres de mélange, auxquelles des poudres d'activateur ont en outre été ajoutées en une quantité de 1 à 6 % en masse, pendant 2 à 6 heures de 800 à 1300 °C ; et
former le film de composé intermétallique IrAl ou le film de composé intermétallique RuAl à la surface du matériau d'alliage à base d'Ir ou du matériau d'alliage à base de Ru,
dans lequel la concentration d'Al dans les poudres d'alliage Al est de 45 à 65% atomiques dans le cas du matériau d'alliage à base d'Ir ou de 35 à 50 % atomiques dans le cas du matériau d'alliage à base de Ru.

2. Procédé selon la revendication 1, dans lequel on ajoute au matériau d'alliage à base d'Ir ou au matériau d'alliage à base de Ru un ou plusieurs composés parmi Sc, Ti, V, Cr, Mn, Y, Zr, Nb, Mo, Tc, Hf, Ta, W ou Re en une quantité telle qu'il y est dissous.

3. Procédé selon la revendication 1 ou la revendication 2, dans lequel les poudres d'alliage d'Al contiennent un ou plusieurs éléments parmi Fe, Ni ou Cr.

4. Procédé selon l'une quelconque des revendications 1 à 3, dans lequel l'épaisseur du film de composé intermétallique IrAl ou du film de composé intermétallique RuAl se situe dans une plage de 2 à 50 µm.
